# EUROPÄISCHE PATENTANMELDUNG

(11) **EP 4 574 763 A1**
(43) Veröffentlichungstag der Anmeldung: **25.06.2025**
(21) Anmeldenummer: 23217922.6
(22) Anmeldetag: 19.12.2023
(51) Int. Cl.: C01B 35/06

(54) **VERFAHREN ZUR FLUORIERUNG VON SAUERSTOFFHALTIGEN HAUPTGRUPPENELEMENTVERBINDUNGEN**

(71) Anmelder: Grillo Chemicals GmbH, 47169 Duisburg (DE)
(72) Erfinder: Ott, Timo, 47169 Duisburg (DE); Biertümpel, Ingo, 47169 Duisburg (DE)
(74) Vertreter: dompatent von Kreisler Selting Werner - Partnerschaft von Patent- und Rechtsanwälten mbB

(57) **Zusammenfassung**

Die vorliegende Erfindung betrifft ein Verfahren zur Fluorierung von sauerstoffhaltigen Hauptgruppenelementverbindungen, wobei als Fluorierungsreagenz Fluorkohlenwasserstoffe genutzt werden. Die sauerstoffhaltigen Hauptgruppenelementverbindungen können dabei ausgewählt werden aus der Borgruppe, Kohlenstoff-Silicium-Gruppe, Stickstoff-Phosphor-Gruppe oder den Chalkogenen.

## Beschreibung

Die vorliegende Erfindung betrifft ein Verfahren zur Fluorierung von sauerstoffhaltigen Hauptgruppenelementverbindungen, wobei als Fluorierungsreagenz organische Fluorkohlenwasserstoffe genutzt werden. Die sauerstoffhaltigen Hauptgruppenelementverbindungen können dabei ausgewählt werden aus der Borgruppe, Kohlenstoff-Silicium-Gruppe, Stickstoff-Phosphor-Gruppe oder den Chalkogenen.

Fluorierte Hauptgruppenelementverbindungen haben eine hohe Bedeutung als Ausgangsstoffe für weitere Reaktionen oder auch als Endprodukt in verschiedensten Bereichen der Technik. Je nach Hauptgruppenelement haben diese Verbindungen unterschiedliche Verwendungsbereiche. So wird beispielsweise Schwefelhexafluorid als Isoliergas in der Mittel- und Hochspannungstechnik oder als Ätzgas bei der Halbleiterherstellung eingesetzt. Ein weiteres technisch bedeutsames Beispiel ist Hexafluoridokieselsäure, welches als Desinfektions- bzw. Konversionskonservierungsmittel genutzt wird. Andere Substanzen werden auch als Katalysatoren eingesetzt wie beispielsweise Hexafluorphosphorsäure bei der Photopolymerisation.

Bei der Fluorierung von Hauptgruppenelementen wird gewöhnlich Flusssäure, welche aus Calciumfluorid mithilfe einer Säure gewonnen wird, eingesetzt. Die Herstellung von Flusssäure erfolgt generell über die Reaktion von Calciumfluorid mit konzentrierter Schwefelsäure. Dieser Prozess hat sich aufgrund der reichlich vorhanden Calciumfluorid-Reserven, sowie einem entsprechend günstigem Preis etabliert. Allerdings sind diese Reserven auch begrenzt und es entstehen bei dem Prozess stöchiometrische Mengen an Calciumsulfat, welche entsprechend entsorgt werden müssen. Ferner ist das entstehende und gewünschte Produkt Flusssäure ein farbloses, stechend riechendes, stark feuchtigkeitsziehendes Gas bzw. in Wasser eine Flüssigkeit, das in jedem Verhältnis mit Wasser mischbar und ab 70 Vol.-% stark rauchend ist. Da bereits bei kleinsten Mengen durch Verschlucken, Hautkontakt oder Einatmen Lebensgefahr herrscht, sowie schwere Verätzung der Haut und schwere Augenschäden entstehen können, sind besondere Sicherheitsmaßnahmen vorzutreffen, falls diese Substanz hergestellt oder damit gearbeitet wird. Dennoch hat Flusssäure aufgrund ihrer vielseitigen Einsatzfähigkeit eine hohe technische Bedeutung, da gewöhnlich fast alle Fluorierungen mithilfe dieser gefährlichen Substanz durchgeführt werden. Um teure technische Anlagen, sowie die hohen Sicherheitsstandards zu umgehen, braucht es somit im Stand der Technik eine Alternative um Hauptgruppenelemente entsprechend zu fluorieren. Da es zurzeit keine Möglichkeit im Stand der Technik gibt, um wirtschaftlich sinnvoll Hauptgruppengruppenelemente zu fluorieren, ohne dabei Flussspat oder Flusssäure einzusetzen, bedarf es neuen Fluorierungsmethoden, welche die prozesstechnischen Nachteile, sowie Risiken im Stand der Technik beschriebenen Methoden vermeidet. Ferner braucht es neuartige Fluorierungsmethoden, da die Flussspat-Reserven ebenfalls endlich sind.

Überraschenderweise hat sich gezeigt, dass durch das in Kontakt bringen von sauerstoffhaltigen Hauptgruppenelementverbindungen mit SO₃ in Form von Oleum und organische Fluorkohlenwasserstoffen, die entsprechenden Hauptgruppenelemente fluoriert werden. Dadurch ist es möglich umweltschädliche Gase, hauptsächlich organische Fluorkohlenwasserstoffe, als Fluorierungsquelle zu nutzen und diese somit weiterzuverwenden. Ferner kann auf den Einsatz von Calciumfluorid verzichtet werden, wodurch keine stöchiometrischen Mengen an Salzen entstehen. Ein weiterer Vorteil der vorliegenden Erfindung ist somit auch die Vermeidung von Flusssäure als zu isolierendes Zwischenprodukt, wodurch ein erhebliches Gesundheitsrisiko für die Personen, die an Fluorierungsanlagen tätig sind, ausgeschlossen wird. In einer ersten Ausführungsform wird die der vorliegenden Erfindung zu Grunde liegende Aufgabe daher gelöst durch ein Verfahren zur Fluorierung einer sauerstoffhaltigen Hauptgruppenelementverbindung, dadurch gekennzeichnet, dass mindestens ein organisches Fluorkohlenwasserstoff mit SO₃ in Form von Oleum und der sauerstoffhaltigen Hauptgruppenelementverbindung in Kontakt gebracht wird, wobei das Hauptgruppenelement ausgewählt wird aus der Borgruppe, Kohlenstoff-Silicium-Gruppe, Stickstoff-Phosphor-Gruppe oder den Chalkogenen.

Nachfolgend werden bevorzugte Ausführungsformen des Verfahrens sowie einer Vorrichtung beschrieben, wobei alle Merkmale in beliebiger Art und Weise miteinander kombiniert werden können und das Verfahren der vorliegenden Erfindung nicht einschränken.

Das erfindungsgemäße Verfahren nutzt somit organische Fluorkohlenwasserstoffe als Fluorierungsquelle für sauerstoffhaltige Hauptgruppenelemente, in denen diese in Kombination mit SO₃ in Form von Oleum in Kontakt gebracht werden. Erfindungsgemäß werden die sauerstoffhaltigen Hauptgruppenelementverbindungen ausgewählt aus der Gruppe der Borgruppe, Kohlenstoff-Silicium-Gruppe, Stickstoff-Phosphor-Gruppe oder den Chalkogenen.

Im Sinne der vorliegenden Erfindung versteht man unter dem Begriff Fluorierung die Einführung eines Fluor-Atoms bzw. eines Fluorid-Anions in die sauerstoffhaltige Hauptgruppenelementverbindung. Dabei bildet ein Fluorid bzw. ein Fluoratom eine Bindung zum jeweiligen Hauptgruppenelement. Somit ist der Begriff Fluoratom bzw. Fluorid in diesem Kontext der Erfindung gleichbedeutend und austauschbar.

Erfindungsgemäß wird als Fluorierungsquelle mindestens ein organisches Fluorkohlenwasserstoff eingesetzt. Im Sinne der vorliegenden Erfindung versteht man unter einem organisches Fluorkohlenwasserstoff eine Kohlenwasserstoffverbindung, welche mindestens ein Fluor bzw. Fluorid umfasst. Im Sinne des erfindungsgemäßen Verfahrens versteht man unter Kohlenwasserstoffe eine Verbindung, welche als Alkane, Alkene oder Alkine nach IUPAC definiert sind. Die organischen Fluorkohlenwasserstoffe können dabei verzweigt, linear, konjugiert und/oder nicht konjugiert sein. Für das erfindungsgemäße Verfahren spielt es dabei keine Rolle, wie viele Fluoratome im Kohlenwasserstoff bzw. im Fluorkohlenwasserstoff enthalten sind. So ist es möglich, dass ein Methanmolekül entweder monofluoriert, difluoriert, trifluoriert oder tetrafluoriert ist. Dasselbe gilt auch für langkettige Kohlenwasserstoffe, wobei der Fluorierungsgrad über m dargestellt werden kann:
- Alkane CₙH₂ₙ₊₂₋ₘFₘ.
- Alkene: CₙH₂ₙ₋ₘFₘ
- Alkine: CₙH₂ₙ₋₂₋ₘFₘ.

Hier sollte erwähnt werden, dass ein Kohlenwasserstoff sowohl eine Alkan-, Alken- und oder Alkingruppe haben kann und somit der Fluorierungsgrad m von der maximalen Anzahl an Wasserstoffen im Kohlenwasserstoff limitiert ist und mindestens ≥ 1 sein muss. Ferner steht n für die Anzahl der Kohlenstoffatome bzw. die Kettenlänge in der organischen Fluorkohlenwasserstoffverbindung. Dabei ist es bei längerkettigen (n≥2) Fluorkohlenwasserstoffen erfindungsgemäß umfasst, dass an einem Kohlenstoffatom auch mehr als ein Fluor gebunden sein kann, während an andere Kohlenstoffatome kein Fluor gebunden ist. Es ist jedoch auch möglich, dass einige oder alle Kohlenstoffatome ein oder mehr Fluor enthalten.

Erfindungsgemäß bedeutet organische (Fluor)-Kohlenwasserstoffe, dass die Verbindungen keine anorganischen Salze, Säuren oder eine Stickstoff-Fluor-Bindung umfassen. Somit sind beispielweise Verbindungen wie Selectflour, welches als Salz vorliegt, oder N-fluoro-o-benzodisulfonimid (NFOBS), N-fluorobenzosulfonimid nicht von der Erfindung umfasst.

Ferner ist in einer besonders bevorzugten Ausführungsform die Kettenlänge der Kohlenwasserstoffe C₁ bis C₂₀, besonders bevorzugt C₁ bis C₁₅ und ganz besonders bevorzugt C₁ bis C₁₀.

Vorzugsweise werden die organischen Fluorwasserstoffe ausgewählt aus CHF₃, CH₂F₂, CH₃F, C₇F₁₅COOH (PFOA), allen Konstitutionsisomeren von C₂H₂F₄, wie beispielsweise 1,1,1,2-Tetrafluorethan (R134), und/oder 2,3,3,3-Tetrafluorpropen (R1234yF).

Im erfindungsgemäßen Verfahren wird die sauerstoffhaltige Hauptgruppenelementverbindungen mit mindestens einem organischen Fluorkohlenwasserstoff und mit SO₃ in Form von Oleum in Verbindung gebracht bzw. in Kontakt gebracht. Erfindungsgemäß versteht man unter Oleum eine Schwefelsäure, welche SO₃ in beliebigen Mengen enthält. In einer bevorzugten Ausführungsform versteht man unter Oleum rauchende Schwefelsäure, in welcher die SO₃-Konzentration mindestens 45 Gew.-%, bevorzugt 60 Gew.-% der Oleum-Lösung ausmacht.

In einer weiteren bevorzugten Ausführungsform der vorliegenden Erfindung findet die Fluorierung der sauerstoffhaltigen Hauptgruppenelementverbindung am Hauptgruppenelement statt. Dies ist in der bevorzugten Ausführungsform so zu verstehen, dass eine Bindung zwischen Sauerstoff und dem Hauptgruppenelement gespalten wird und stattdessen mindestens ein Fluoratom bzw. Fluorid eingebunden wird. Somit kann die Bruttoreaktion, die hier erfolgt, formell als eine Substitutionsreaktion angesehen werden. Ohne an eine bestimmte Theorie gebunden zu sein, kann die Reaktion, die dem erfindungsgemäßen Verfahren vorliegt als eine nukleophile Substitution betrachtet werden. Dennoch kann ein radikalischer Fluorierungsprozess nicht gänzlich ausgeschlossen werden.

In einer weiteren bevorzugten Ausführungsform wird in dem erfindungsgemäßen Verfahren pro einzuführenden Fluoratom, das in die sauerstoffhaltige Hauptgruppenelementverbindung eingeführt wird, mindestens ein Äquivalent, bevorzugt 1 bis 10 Äquivalente, ganz bevorzugt 1 bis 5 Äquivalente SO₃ eingesetzt. Dabei beziehen sich die Äquivalente auf die einzusetzende Menge an der sauerstoffhaltigen Hauptgruppenelementverbindung. Äquivalenz in diesem Sinne der Erfindung bedeutet die Stoffmengenäquivalenz, welche als n in mol angegebenen wird. Der limitierende Faktor für die Äquivalenz ist bevorzugt die sauerstoffhaltige Hauptgruppenelementverbindung. Theoretisch kann aber auch ein anderes Reagenz als limitierend betrachtet werden, solange sie absolut gesehen die kleinste Stoffmenge in der Reaktion ausmacht. Der Fachmann vermag es die Stoffmengen der Reagenzien entsprechend anzupassen. Somit weiß der Fachmann ganz genau, in welchem Verhältnis er welche Reagenzien einzusetzen hat.

In einer weiteren bevorzugten Ausführungsform des erfindungsgemäßen Verfahrens liegt mindestens ein organisches Fluorkohlenwasserstoff in einer überkritischen Phase vor. Unter überkritischer Phase versteht man einen rein thermodynamischen Zustand eines Stoffes, der sich durch Angleichen der Dichte von flüssiger und Gasphase kennzeichnet. Da mindestens eines der organischen Fluorkohlenwasserstoffe in dieser bevorzugten Ausführungsform in der überkritischen Phase vorliegt, ist eine Unterscheidung der beiden Aggregatzustände nicht mehr möglich. Somit stellt dieser Punkt das obere Ende der Dampfdrucckurve eines Phasendiagramms dar. Entsprechend müssen die Verfahrensparameter so ausgewählt werden, dass in der bevorzugten Ausführungsform mindestens ein organisches Fluorkohlenwasserstoff in einer überkritischen Phase vorliegt.

In einer weiteren bevorzugten Ausführungsform ist das Verfahren dadurch gekennzeichnet, dass zunächst mindestens ein organisches Fluorkohlenwasserstoff mit dem SO₃ in Form von Oleum vorgelegt und anschließend die sauerstoffhaltige Hauptgruppenelementverbindung dazugegeben wird. Dabei ist es für das erfindungsgemäße Verfahren in dieser bevorzugten Ausführungsform irrelevant, ob zunächst der mindestens eine organische Fluorkohlenwasserstoff vorgelegt wird und dann das SO₃ hinzugegeben wird oder das SO₃ vorgelegt wird und dann der mindestens eine organische Fluorkohlenwasserstoff hinzugegeben wird.

In einer weiteren bevorzugten Ausführungsform wird das erfindungsgemäße Verfahren so durchgeführt, dass es bei einem Druck von 20 bar bis 60 bar, bevorzugt von 30 bar bis 50 bar und insbesondere bevorzugt von 35 bar bis 45 bar durchgeführt wird. Dabei kann in dieser bevorzugten Ausführungsform der Druck insbesondere so ausgewählt werden, dass mindestens ein organisches Fluorkohlenwasserstoff in der überkritischen Phase vorliegt.

In einer weiteren bevorzugten Ausführungsform des erfindungsgemäßen Verfahrens ist das Verfahren dadurch gekennzeichnet, dass es bei einer Temperatur von 0 °C bis 300 °C, bevorzugt von 50 °C bis 250 °C durchgeführt wird.

Dabei sollte erwähnt werden, dass der Fachmann durchaus weiß, dass, wenn man den Druck erhöht, man eine niedrigere Temperatur, um dasselbe Verfahren zu erreichen, benötigt.

In einer besonders bevorzugten Ausführungsform des erfindungsgemäßen Verfahrens ist die sauerstoffhaltige Hauptgruppenelementverbindung dadurch gekennzeichnet, dass sie eine Einfach- und/oder Zweifachbindung zu mindestens einem Sauerstoffatom innerhalb der als Edukt eingesetzten Hauptgruppenelementverbindung aufweist. Somit fallen in einer bevorzugten Ausführungsform unter diese Bezeichnung alle Hauptgruppenelementverbindungen, die entweder ein Hydroxid, ein Oxid und/oder Mischungen des Hauptgruppenelementes sind.

Entsprechend umfasst die in dem erfindungsgemäßen Verfahren einzusetzende sauerstoffhaltige Hauptgruppenelementverbindung zumindest die folgende Struktur (I):

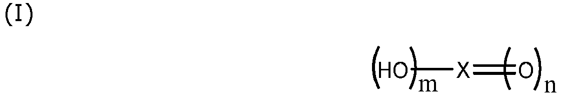

Wobei m oder n mindestens 1 sein müssen. X ist ein erfindungsgemäßes Hauptgruppenelement ausgewählt aus der Gruppe der Borgruppe, Kohlenstoff-Silicium-Gruppe, Stickstoff-Phosphor-Gruppe oder den Chalkogenen. Weitere Anionen, Kationen und/oder kovalente Bindungen zu anderen Elementen oder Gruppen sind ebenfalls denkbar, welche nicht explizit dargestellt wurden.

Wie bereits oben kurz beschrieben werden erfindungsgemäß die sauerstoffhaltigen Hauptgruppenelementverbindungen ausgewählt aus dem Hauptgruppenelement der Borgruppe, Kohlenstoff-Silicium-Gruppe, Stickstoff-Phosphor-Gruppe oder den Chalkogenen. Dabei kann X aus der Struktur (I) für ein Hauptgruppenelement stehen, das eine Oxidationsstufe von +III bis +VII hat. Somit wird X ausgewählt aus den Elemente Bor, Kohlenstoff, Stickstoff, Phosphor, Arsen, Selen, Tellur, Aluminium, Gallium, Indium, Titan, Silizium, Germanium, Zinn, Blei, oder Bismut. Je nach gängigster Oxidationsstufe des Hauptgruppenelements können entsprechend viele Oxide und/oder Hydroxide an dem entsprechenden Element gebunden sein.

Die Hauptgruppenelementverbindungen sind ferner dadurch gekennzeichnet, dass man sie auch als elektrophile Verbindung bezeichnen könnte. Elektrophile Verbindungen werden in dem erfindungsgemäßen Verfahren so verstanden, dass sie als Elektronenakzeptoren fungieren können. So ist es im erfindungsgemäßen Verfahren von Vorteil eine sauerstoffhaltige Hauptgruppenelementverbindung zu nutzen, welche ein unvollständiges Elektronenoktett aufweist und somit als Elektronenpaarakzeptor fungieren kann. Es sollte hier erwähnt werden, dass solche Verbindungen, mit unvollständigen Elektronenoktett für das erfindungsgemäße Verfahren zwar von Vorteil sein können, aber keine Voraussetzung für das Verfahren sind.

Der Fachmann kennt solche Verbindungen in der Regel. Beispielsweise sind solche Verbindungen Aluminium(III)-oxid, Galium(III)-oxid, Indium(III)-oxid oder Bor(III)-oxid. Da Lewis-Säuren Elektronenakzeptoren sind, sind sie auch automatisch elektrophile Verbindungen. Unter elektrophilen Verbindungen versteht man Verbindungen, welche positiv geladen sind, positiv polarisiert oder ein hohes allgemeines Bestreben dazu haben, Elektronen aufzunehmen.

In einer besonders bevorzugten Ausführungsform des erfindungsgemäßen Verfahrens beinhaltet die sauerstoffhaltige Hauptgruppenelementverbindung mindestens ein Hauptgruppentruppenelement ausgewählt aus Bor, Phosphor, Silizium, Schwefel, Arsen und/oder Antimon besonders bevorzugt Bor, Phosphor, Silizium, Schwefel, Arsen, ganz besonders bevorzugt Phosphor, Silizium und Schwefel.

In einer weiteren bevorzugten Ausführungsform des erfindungsgemäßen Verfahrens ist das Verfahren so dadurch gekennzeichnet, dass die sauerstoffhaltige Hauptgruppenelementverbindung ausgewählt wird aus einem Mineral, bevorzugt einem Oxid, Mischoxid, Hydroxid, der Säure, der entsprechenden Salze oder Ester der Säure oder Mischung dieser des jeweiligen Hauptgruppenelements. So kann die sauerstoffhaltige Hauptgruppenelementverbindung sowohl Doppelbindungen als auch Einzelbindungen zum Sauerstoff beinhalten, wie oben bereits beschrieben. Auch wenn es zu manchen der Hauptgruppenelementverbindungen keine Säure im klassischen Sinne, also einer Brönsted Säure, existiert, so ist es dennoch möglich diese als Lewis-Säuren vorliegen zu haben. Unter Salze oder Ester der Säure versteht man die Salze der entsprechenden eingesetzten Brönsted Säure bzw. einer Carbonsäure.

In einer weiteren bevorzugten Ausführungsform des erfindungsgemäßen Verfahrens können somit Oxide, Hydroxide, Mineralien, die die erfindungsgemäßen Hauptgruppenelemente umfassen und/oder Mischungen verwendet werden. So kann beispielsweise als sauerstoffhaltiges Hauptgruppenelement, Bortrioxid (B₂O₆), Borsäure (B(OH)₃), Borax (Na₂B₄O₅(OH)₄), Alumosilicate (Mischungen aus SiO₂ und Al₂O₃), Aluminiumoxid (Al₂O₃), Aluminiumhydroxid (Al(OH)₃), Phosphor(V)-oxid (P₄O₁₀), Arsen(III)-oxid (As₂O₃), Arsenige Säure (As(OH)₃) Antimon(III)-oxid (Sb₂O₃), Antimon(V)-oxid (Sb₂O₅), Schwefeldioxid (SOz), Selendioxid (SeOz) oder Tellurdioxid (TeOz) eingesetzt werden.

In einer weiteren bevorzugten Ausführungsform kann im erfindungsgemäßen Verfahren ein zusätzlicher Katalysator eingesetzt werden. In dieser bevorzugten Ausführungsform ist das Verfahren dadurch gekennzeichnet, dass der eingesetzte Katalysator eine Lewis-Säure ist, welche sich von der sauerstoffhaltigen Hauptgruppenelementverbindung verschieden ist. Hierbei wird der Katalysator so ausgewählt, dass er sich strukturell von der sauerstoffhaltigen Hauptgruppenelementverbindung unterscheidet. So kann beispielweise in einer bevorzugten Ausführungsform Aluminium(III)-chlorid als Katalysator eingesetzt werden um Aluminium(III)-hydroxid im erfindungsgemäßen Verfahren zu fluorieren. Hierbei muss der Katalysator so ausgewählt werden, dass dieser eine stärkere Lewis-Säure ist als die als Edukt eingesetzte sauerstoffhaltige Hauptgruppenelementverbindung. Es wird angenommen, dass hierdurch am zu fluorierenden Hauptgruppenelement eine noch stärkere positive Partialladung entsteht. Die Auswahl des Katalysators nach der Lewis-Azidität erfolgt nach gängigen Methoden, insbesondere anhand der Gutmann-Beckett-Methode. Somit können Katalysatoren ausgewählt werden aus denselben Elementen wie die sauerstoffhaltigen Hauptgruppenelementverbindungen, sowie Übergangsmetallverbindungen. Die Anionen der Katalysatoren können beispielsweise ausgewählt werden aus Chloriden oder Triflaten.

So ist es in einer bevorzugten Ausführungsform möglich Bortrioxid als Katalysator für die Fluorierung von Borsäure zu nutzen.

In einer weiteren bevorzugten Ausführungsform des erfindungsgemäßen Verfahrens ist das Verfahren dadurch gekennzeichnet, dass mindestens eine organische Fluorkohlenwasserstoffverbindung ein fluoriertes Alkan, Alken oder Alkin ist und insbesondere eine Kohlenstoffanzahl von 1 bis 20, bevorzugt 1 bis 10, meist bevorzugt 1 bis 5 hat. Wie bereits oben beschrieben, spielt die Anzahl der Fluoratome dabei keine Rolle für die Auswahl des mindestens einen organischen Fluorkohlenwasserstoffes. Dennoch kann über die Anzahl der einzuführenden Fluoratome in das sauerstoffhaltige Hauptgruppenelement, das mindestens eine organische Fluorkohlenwasserstoff so ausgewählt werden, dass atomeffizient gearbeitet werden kann.

In einer weiteren bevorzugten Ausführungsform des erfindungsgemäßen Verfahrens wird die sauerstoffhaltige Hauptgruppenelementverbindung entweder als Reinstoff oder als Lösung in einer Brönsted Säure, besonders bevorzugt Schwefelsäure, bereitgestellt. Dabei ist das in dieser Ausführungsform für das erfindungsgemäße Verfahren nicht wesentlich, wie gut sich die sauerstoffhaltige Hauptgruppenelementverbindung in der Brönsted Säure, bevorzugt Schwefelsäure, löst. Dabei wäre es denkbar, dass die korrespondierenden Basen, bei Schwefelsäure namentlich die Sulfate zunächst entstehen und diese anschließend fluoriert werden.

In einer weiteren bevorzugten Ausführungsform des erfindungsgemäßen Verfahrens entsteht dabei eine Verbindung, welche das Hauptgruppenelement beinhaltet, dass ein Fluorid, eine Fluorwasserstoffsäure, Fluorohydroxy-, Fluorooxy- und/oder Fluorohydroxyoxy-Verbindung beinhaltet. Somit ist es erfindungsgemäß in dieser bevorzugten Ausführungsform möglich, dass man die Verbindungen kontrolliert mono-, di-, tri-, tetra-, penta-, hexa-fluoriert. Diese Stöchiometrie kann, wie oben bereits beschrieben, über die Oleum- bzw. SO₃-Menge kontrolliert werden. So kann beispielsweise aus SiOz, SiF₄, H₂SiF₆ und/oder Mischungen, aus B(OH)₃, BF₃, HBF₄ und/oder Mischungen und aus P₄O₁₀ PF₅, HPF₆ und/oder Mischungen entstehen. Das benötigte Äquivalent HF kann dabei aus der erfindungsgemäßen Reaktion bereitgestellt werden, wobei die über die Stöchiometrie der Reagenzien, die Entstehung des HF kontrolliert werden kann.

Dabei sollte beachtet werden, dass nicht HF per se entstehen muss, sondern eine Verbindung, welche formell HF umfasst und so abgeben kann, dass beispielsweise aus BF₃ HBF₄ oder aus PF₅ HPF₆ entstehen kann.

In einer weiteren bevorzugten Ausführungsform des erfindungsgemäßen Verfahrens wird das Schwefeltrioxid, also SO₃, flüssig in Form von Oleum bereitgestellt. Erfindungsgemäß versteht man unter Oleum rauchende Schwefelsäure, eine ölige, meist braun gefärbte Flüssigkeit mit einer hohen Dichte, welche ein Gemisch aus Schwefelsäure, Di-Schwefelsäure und Schwefeltrioxid ist.

In einer weiteren bevorzugten Ausführungsform des erfindungsgemäßen Verfahrens wird die Reaktion in einem Lösungsmittel durchgeführt, welches ausgewählt ist aus Schwefelsäure, Fluorsulfonsäure, überkritisches COz, organischem Carbonat oder einer ionischen Flüssigkeit. Ein Beispiel für solch ein organisches Carbonat wäre beispielsweise die Dimethylcarbonat.

Ferner kann in einer bevorzugten Ausführungsform des erfindungsgemäßen Verfahrens das Verfahren unter Rühren bei gleichmäßigem Gaseintrag stattfinden. Das sich hier einzusetzende Gas wird gewählt aus inerten Gasen, die nicht mit der Mischung reagieren können. Beispielsweise kann Stickstoff, Argon oder ein anderes, dem Fachmann bekanntes, inertes Gas eingesetzt werden.

Es ist auch möglich in einer bevorzugten Ausführungsform des erfindungsgemäßen Verfahrens, das Verfahren in einem kontinuierlichen oder in einem Batchverfahren zu betreiben.

Ferner ist der pH-Wert des erfindungsgemäßen Verfahrens im sauren Bereich, bevorzugt kleiner als 7, besonders bevorzugt kleiner als 0.

Nachfolgend wird das erfindungsgemäße Verfahren anhand von Beispielen besser verdeutlicht.

### Beispiel 1:

Boroxid (B₂O₃, 6,96 g, 100 mmol) werden im Hochdruckreaktor als Pulver vorgelegt. Anschließend werden Trifluormethan (CHF₃, 42,2 bar) aufgedrückt. Im Anschluss werden 65 gewichtsprozentiges Oleum (428,6 g) mit einer HPLC-Pumpe in den Reaktor gefördert, wobei der Druck auf 53,2 bar steigt. Der Reaktor wird nun langsam auf 130 °C erwärmt, wobei ab ca. 80 °C eine stark exotherme Reaktion beginnt. Dies kann an einem Temperaturanstieg festgestellt werden. Nach 12 h Reaktionszeit wird das nicht umgesetzte Trifluormethan abgelassen. Eine GC-MS-Analyse der Gasphase ergibt SOz, COz und Spuren BF₃. In der flüssigen Reaktionsmischung wird BF₃ ¹⁹F-NMR-Spektroskopisch nachgewiesen bei -131 ppm.

Mit einem Fluorstandard als Referenz ergibt sich eine Ausbeute von: 62,3%

Beispiel 2:

Borsäure (H₃BO₃, 15,46 g, 250 mmol) werden im Hochdruckreaktor als weißes Pulver vorgelegt. Anschließend werden Trifluormethan (CHF₃, 42,2 bar) aufgedrückt. Im Anschluss werden 65 gewichtsprozentiges Oleum (482,0 g) mit einer HPLC-Pumpe in den Reaktor gefördert, wobei der Druck auf 57,9 bar steigt. Der Reaktor wird nun langsam auf 130 °C erwärmt, wobei ab ca. 40 °C eine stark exotherme Reaktion beginnt. Dies kann an einem Temperaturanstieg festgestellt werden. Nach 12 h Reaktionszeit wird das nicht umgesetzte Trifluormethan abgelassen. Eine GC-MS-Analyse der Gasphase ergibt SOz, COz und Spuren BF₃. In der flüssigen Reaktionsmischung wird BF₃ ¹⁹F-NMR-Spektroskopisch nachgewiesen bei -131 ppm.

Mit einem Fluorstandard als Referenz ergibt sich eine Ausbeute von: 78,5%

## Patentansprüche

1. Verfahren zur Fluorierung einer sauerstoffhaltigen Hauptgruppenelementverbindung, **dadurch gekennzeichnet, dass** mindestens ein organische Fluorkohlenwasserstoff mit SO₃ in Form von Oleum und der sauerstoffhaltigen Hauptgruppenelementverbindung in Kontakt gebracht wird, wobei das Hauptgruppenelement ausgewählt wird aus der Borgruppe, Kohlenstoff-Silicium-Gruppe, Stickstoff-Phosphor-Gruppe oder den Chalkogenen.

2. Verfahren nach Anspruch 1, **dadurch gekennzeichnet, dass** die Fluorierung am Hauptgruppenelement der sauerstoffhaltigen Hauptgruppenelementverbindung erfolgt.

3. Verfahren nach mindestens einem der Ansprüche 1 oder 2, **dadurch gekennzeichnet, dass** pro einzuführendes Fluor in die sauerstoffhaltige Hauptgruppenelementverbindung mindestens 1 Äquivalent, bevorzugt 1 bis 10 Äquivalente, ganz besonders bevorzugt 1 bis 5 Äquivalente SO₃ eingesetzt werden.

4. Verfahren nach mindestens einem der Ansprüche 1 bis 3, **dadurch gekennzeichnet, dass** der mindestens ein organische Fluorkohlenwasserstoff in einer überkritischen Phase vorliegt.

5. Verfahren nach mindestens einem der Ansprüche 1 bis 4, **dadurch gekennzeichnet, dass** zunächst der mindestens eine Fluorkohlenwasserstoff mit SO₃ vorgelegt und anschließend die Hauptgruppenelementverbindung dazugegeben wird.

6. Verfahren nach mindestens einem der Ansprüche 1 bis 5, **dadurch gekennzeichnet, dass** Verfahren bei einem Druck von 20 bar bis 60 bar, bevorzugt von 30 bar bis 50 bar durchgeführt wird.

7. Verfahren nach mindestens einem der Ansprüche 1 bis 6, da **dadurch gekennzeichnet, dass** das Verfahren bei einer Temperatur von 0 °C bis 300 °C, bevorzugt von 50 °C bis 250 °C durchgeführt wird.

8. Verfahren nach mindestens einem der Ansprüche 1 bis 7, **dadurch gekennzeichnet, dass** die sauerstoffhaltige Hauptgruppenelementverbindung mindestens eine Einfach- und/oder Zweifachbindung zu mindestens einem Sauerstoffatom innerhalb der eingesetzten Hauptgruppenelementverbindung aufweist.

9. Verfahren nach mindestens einem der Ansprüche 1 bis 8, **dadurch gekennzeichnet, dass** die sauerstoffhaltige Hauptgruppenelementverbindung mindestens eines der folgenden Hauptgruppenelemente ausgewählt aus Bor, Phosphor, Silizium, Schwefel, Arsen und/oder Antimon besonders bevorzugt Bor, Phosphor, Silizium, Schwefel, Arsen, ganz besonders bevorzugt Phosphor, Silizium und Schwefel umfasst.

10. Verfahren nach mindestens einem der Ansprüche 1 bis 9, **dadurch gekennzeichnet, dass** die sauerstoffhaltige Hauptgruppenelementverbindung ausgewählt wird aus einem Mineral, bevorzugt einem Oxid, Mischoxid, Hydroxid, der Säure, der entsprechenden Salze oder Ester der Säure oder Mischungen dieser des jeweiligen Hauptgruppenelements.

11. Verfahren nach mindestens einem der Ansprüche 1 bis 10, **dadurch gekennzeichnet, dass** das der mindestens eine organische Fluorkohlenwasserstoff ein fluoriertes Alkan, Alken oder Alkin ist und insbesondere eine Kohlenstoffanzahl von 1 bis 20, bevorzugt 1 bis 10, meist bevorzugt von 1 bis 5 hat.

12. Verfahren nach mindestens einem der Ansprüche 1 bis 11, **dadurch gekennzeichnet, dass** ein Fluorid, eine Fluorwasserstoffsäure, Fluorohydroxy-, Fluorooxy- und/oder Fluorohydroxyoxy-Verbindung, welche das Hauptgruppenelement der Hauptgruppenelementverbindung beinhaltet, entsteht.

13. Verfahren nach mindestens einem der Ansprüche 1 bis 12, **dadurch gekennzeichnet, dass** eine Lewis-Säure als Katalysator eingesetzt wird, welche sich von der sauerstoffhaltigen Hauptgruppenelementverbindung unterscheidet.

14. Verfahren nach mindestens einem der Ansprüche 1 bis 12, **dadurch gekennzeichnet, dass** die Reaktion in einem Lösungsmittel, ausgewählt aus Schwefelsäure, Fluorsulfonsäure, überkritisches COz, organischem Carbonat oder einer ionischen Flüssigkeit, durchgeführt wird.
